# EUROPEAN PATENT APPLICATION

(11) **EP 2 815 645 A1**
(43) Date of publication of application: **24.12.2014**
(21) Application number: 13425088.5
(22) Date of filing: 21.06.2013
(51) Int. Cl.: A01M 13/00, A01N 59/00, A01P 1/00, A01N 25/08

(54) **Process for microorganism pest control in an agricultural land and plant therefor**

(71) Applicant: IGS Italia S.r.l., 58100 Grosseto (IT)
(72) Inventor: DE Groen, Oscar Roderik Leo, I-58100 Grosseto (GR) (IT)
(74) Representative: Bonvicini, Davide

(57) **Abstract**

A process of microorganism pest control in a agricultural land (2) using a gaseous fluid and comprising the steps of:
- preparing a gas mixture comprising the gaseous fluid, with predetermined quantitative parameters of the gaseous fluid, and
- distributing the gas mixture into said agricultural land according to predetermined time and quantity parameters.

## Description

### Field of the invention

The present invention relates to a process for microorganism pest control in an agricultural land using a gaseous fluid.

The invention also relates to a plant for microorganism pest control in a agricultural land.

### Description of the prior art

In terms of sustained productivity, all the crops, and particularly vegetable, floriculture and nursery crops as well as other outdoor herbaceous plants are hindered in their growth and development by the presence of microorganisms in the soil that affect their development. The increasing specialization of agricultural land does not facilitate, and even limits sustained productivity of such crops.

Microorganisms such as fungi and parasites, of both animal and plant origin, constantly attack crop roots and may jeopardize most of the harvest. Animal parasites include, for example, nematodes, also known as roundworms, which feed on plant juices. Particularly, nematodes generally have a cylindrical body and have special stylets at their mouth, through which they feed by piercing crop roots. Therefore, excrescent malformations are generated at the roots of crops, with induced formation of galls or cecidia.

Thus, nematodes may cause crop leaves to wither, perish and turn to yellow, thereby causing impaired development and wither of planted crops, and a reduced yield, with harvest being thus jeopardized.

Certain fungi, such as *Fusarium,* which is common in agricultural lands, attack crop roots and may cause rot thereof, with crop development and harvest being jeopardized.

In an attempt to obviate these drawbacks, sequential cropping or crop rotation, with various crops alternating in the same soil, has been always used.

While this solution provides satisfactory results in many respects, it is poorly employed in intensive crops.

Therefore, the agricultural land must undergo special treatments, such as pest control, to reduce the presence of microorganisms and parasites to acceptable levels and maintain a good fertility level.

Pest control in an agricultural land currently involves treatment of the agricultural land with weed killing agents before planting out the crop. Weed killing agents are generally chemical or natural substances, which are distributed in liquid or granular form over the soil. Weed killing agents are known to include agents comprising, for instance, nitrogen, in both directly available and slow-release forms.

Nevertheless, once the crop has been planted, or as it grows or ripens, the soil cannot be treated with these weed-killing agents, whereby the crop is exposed to the risk of microorganism attacks throughout its growth process, to harvest.

Furthermore, pest control must be carefully planned according to a preset time- and dose-based schedule, using weed-killing agents that are compatible with the soil and with the crop that will be planted out. Particularly, weed-killing agents on the soil must be prevented from reacting and mixing with other agents to generate substances that may be harmful or noxious to the crop.

It should be further noted that the temperature and moisture of the agricultural land affect the effectiveness of weed-killing agents, whereby scheduled management and planning of the pest control process is required to obtain the desired results.

Furthermore, special care must be paid to storage of weed-killing agents, which must be generally stored in particularly dry places or in special storage sites.

In the light of the above described prior art, one object of the present invention is to provide a process and a plant for microorganisms pest control in an agricultural land which, when used alternatively to prior art methods and plants, afford efficient reduction of the level of microorganisms in the agricultural land.

A further object of the present invention is to provide a process and a plant for pest control, that is environment- and health-friendly.

Another object is to provide a process and a plant that are highly simplified and practical, and can be used for both outdoor and small-plot cultivation in an entirely autonomous manner.

A further object is to provide a process and a plant that are entirely automated and allow special planning of actions, for environmental-friendly compatibility with agricultural activities and successive crops.

Yet another object is to provide a process that can be easily implemented and carried out at a low cost.

A further object is to provide a plant that can be easily installed and also dismantled, as needed, for later use.

The technical problem underlying the present invention is to provide a pest control process and a corresponding plant, that can be used in any stage of cultivation, i.e. before planting out, during growth to harvest, and that can obviate, by its functional and structural characteristics, the drawbacks that still limit prior art processes and plants.

### Summary of the Invention

The technical problem is solved by a process for microorganisms pest control in an agricultural land using a gaseous fluid, comprising the steps of:
- preparing a gas mixture comprising said gaseous fluid, with predetermined quantitative parameters of said gaseous fluid, and
- distributing said gas mixture into said agricultural land according to predetermined time and quantity parameters.

The problem is also solved by a plant for pest control in an agricultural land, comprising:
- a gaseous fluid unit for generating a gas mixture with predetermined time and quantity parameters;
- programmable control means coupled to said gaseous fluid unit and adapted to program said gaseous fluid unit to distribute said gas mixture according to predetermined time and quantity parameters;
- at least one distribution circuit coupled to said gaseous fluid unit and having at least one tubing section that is adapted to be placed on said agricultural land, sad tubing section comprising at least one opening, allowing said gas mixture to flow out into said agricultural land.

According to an embodiment, the gaseous fluid unit is a gaseous fluid generating assembly or one or more removable gaseous fluid containers in which the gaseous fluid has predetermined high-pressure quantitative parameters. In one embodiment, the removable gaseous fluid containers are equipped with a pressure reducer that allows control of the gaseous fluid pressure in the distribution circuit.

Unless otherwise stated, as used herein the percentages are intended to relate to the volume of one component based on the total volume of the mixture or composition.

The features and advantages of the present invention will appear from the following detailed description of one practical embodiment, which is given by way of illustration and without limitation in the annexed drawings, in which:
- Figure 1 is a diagrammatic top view of a pest control plant according to the present invention;
- Figure 2 shows a portion of the distribution circuit of the plant of the present invention, in one embodiment with an underground part;
- Figure 3 is a top view of an arrangement of the plant according to the present invention;

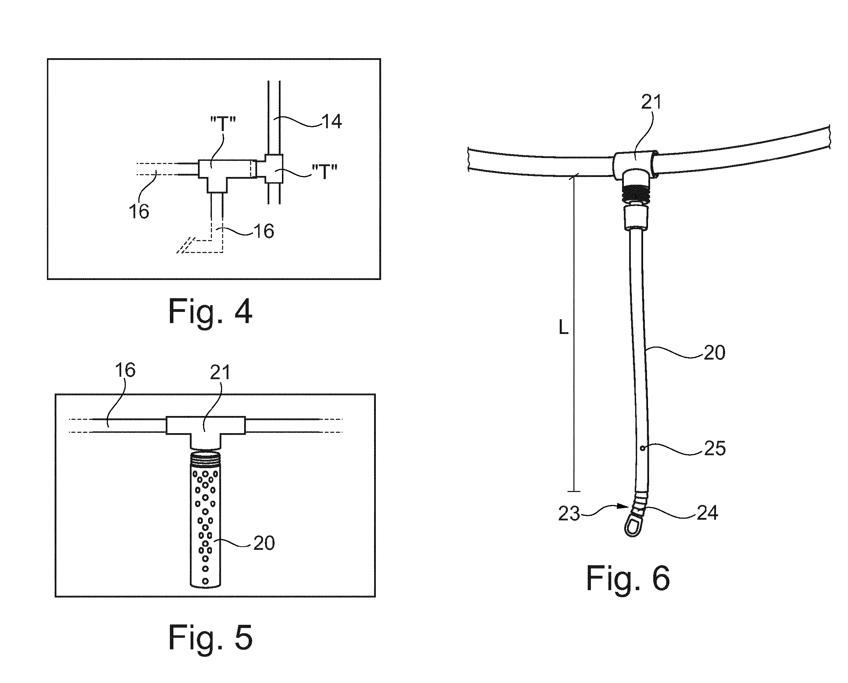

- Figures 4-6 show construction details of the pest control plant according to the present invention;

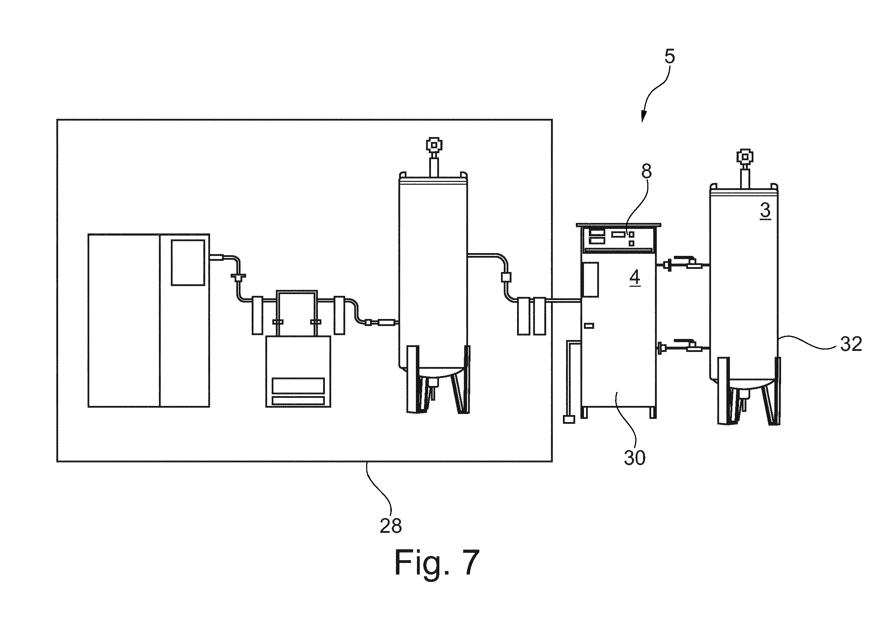

- Figure 7 shows a nitrogen-generating unit for use in the plant according to one embodiment.

### Detailed Description

The process for microorganism pest control in an agricultural land 2 according to the present invention uses a gaseous fluid.

In one embodiment, the gaseous fluid is a gas mainly composed of an inert gas, such as nitrogen 3.

The process comprises the following steps:
- preparing a gas mixture 4 containing nitrogen, with predetermined quantitative parameters of nitrogen 3, and
- distributing the gas mixture 4 into the agricultural land 2 according to predetermined time and quantity parameters.

As used herein, the term gas mixture containing nitrogen is preferably intended to designate a mixture of inert gas having nitrogen as a main constituent. More preferably, the mixture of inert gas comprises a minor oxygen residue whose amount has no noxious and/or abnormal effect on the crop roots for the growth of the planted out crop and/or on any non-pathogenic organisms in the soil.

By way of example and without limitation, in one embodiment, the mixture of inert gas with about 95% nitrogen by volume also has 1% or 2% argon by volume and traces of additional noble gases.

In one embodiment, the process involves distribution of the gas mixture 4 containing nitrogen 3 in the proximity of the surface P of the agricultural land 2.

The process further comprises the steps of:
- providing a circuit 10 for distributing the gas mixture 4 containing nitrogen 3 on said agricultural land 2; and
- providing the distribution circuit 10 with at least one tubing section 16 comprising at least one opening 25 for delivery of the gas mixture 4 containing nitrogen 3 into the agricultural land 2.

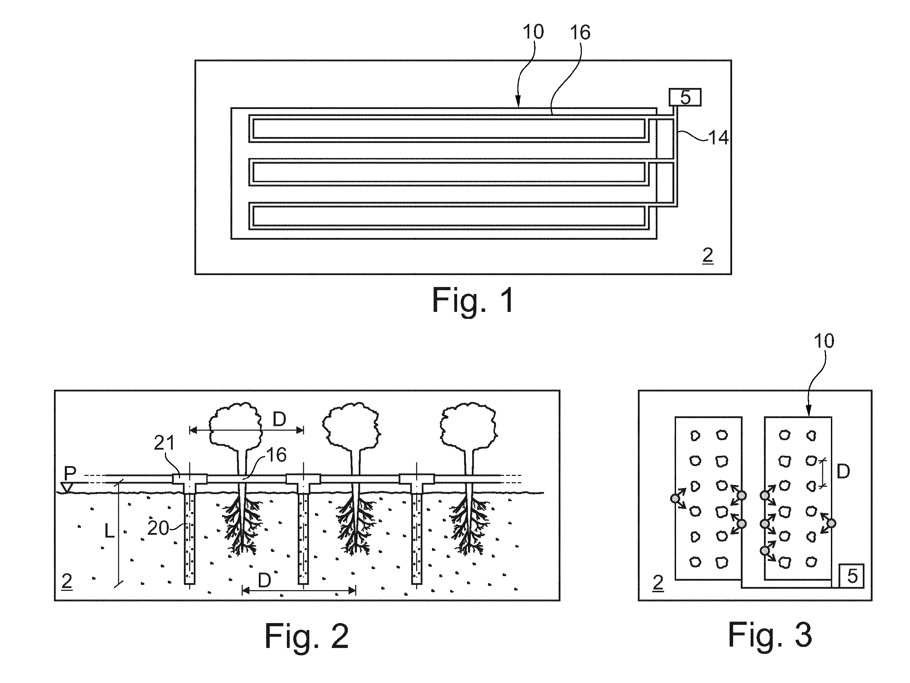

In this process the distribution circuit 10 is namely formed by associating a plurality of tubing sections 16, and laying such sections 16 on the surface P, to define a closed-ring circuit, which is interposed between rows of seedlings of the planted crop, as schematically shown in Figure 3. Thus, the gas mixture 4 containing nitrogen 3 will be selectively distributed proximate to the position in which the seedlings of the crop will be planted out.

Advantageously, in one embodiment of the present invention, the distribution of the gas mixture 4 also occurs at a preset level L below the surface P of the agricultural land 2.

In this embodiment, the process comprises the steps of:
- inserting a portion 20 of the tubing section 16 into the agricultural land 2, with the at least one opening 25 being placed at the preset level L below the surface P of the agricultural land 2; and
- injecting the gas mixture 4 through the at least one opening 25 into the agricultural land 2 according to predetermined time and quantity parameters.

Particularly, in this process, each tubing section 16 is associated with a tube portion 20 for a substantially T-shaped connection, through the interposition of a removable coupling 21 having connection means.

Each tube portion 20 is introduced into the agricultural land 2 and is placed at a distance D from the next, preferably at the same distance D at which the seedlings of the crops are planted along rows, and between the latter, as shown in Figures 2 and 3.

The preset level L is determined relative to the length of the roots of the crop that has been planted out in the agricultural land 2, such that the gas mixture 3 may saturate a strip of the agricultural land 2 to such a depth as to create a totally unfavorable environment for microorganisms, which still has enough oxygen as to allow optimal growth of the crop roots.

In one embodiment, the tube portion 20 that assumes a position substantially perpendicular to the tube section 16 in the operating position, is closed at the free end 23 with a closing plug 24 which is associated with the tube portion 20 or is formed as a single body with respect to the tube portion 20.

In one embodiment, the tube portion 20 is formed with a plurality of openings 25 or holes arranged over a section or the entire axial length of the tube portion 20 for even distribution of the gas mixture 4 around the tube portion 20.

According to a further embodiment, in the process two circular openings 25 are formed on the lateral surface of each tube portion 20, in the proximity of the free end 23, each opening 25 defining a delivery cone for delivering the gas mixture 4. Thus, by placing each tube portion 20 between two successive seedlings, with the at least one opening 25 at the level L below the surface P of the agricultural land 2, the roots of each seedling of the crop are impinged upon by at least one jet of the gas mixture 4 or multiple jets from the successive tube portions 20 of the distribution circuit 10.

Advantageously, the closing plug 24 of each tube portion 20 forces the gas mixture 4 to come out of the openings 25 substantially parallel to the surface P.

According to an embodiment, the gas mixture 4 is injected at a pressure P1, which has a value 0 to 3 higher than atmospheric pressure at said openings 25, ensuring even distribution in the strip of agricultural land 2 that is close to the tube portion 20. The pressure P1 obviously depends on the density of the agricultural land, and on the temperature and moisture thereof.

Conveniently, each tube portion 20 may be equipped with a nozzle associated with said at least one opening 25.

In the process, the step of distributing the gas mixture 4 into the agricultural land 2 is programmed and carried out both during preparation of the agricultural land 2, before planting the crops, and when the crops have been already planted out, i.e. during growth and ripening, to harvest.

In the distribution step, the gas mixture 4 is distributed with predetermined time and quantity parameters, which are diversified according to preset values that may differ from before to after crop planting.

In one embodiment, the process requires the volume percent of nitrogen 3 based on the total volume of the gas mixture 4 to range from 78% to 99.9%, preferably from 90% to 99.9%. Preferably, the gas mixture 4 has not less than 0.1 % and not more than 10% residual oxygen by volume.

In a preferred embodiment, the gas mixture 4 has 5% to 6% residual oxygen by volume, with more than 78% nitrogen by volume, more preferably 90% or more.

According to an embodiment, in the process the gas mixture 4 is prepared from ambient air using a gaseous fluid unit 5 which, as needed, may be a nitrogen generator unit 5 or one or more removable gaseous fluid containers.

If the gas mixture 4 is generated directly proximate to such agricultural land 2, the nitrogen generating unit 5 is directly placed on site. Alternatively, the nitrogen-containing gas mixture 4 may be produced and stored in specially designed removable containers, in which the gas mixture has predetermined quantity and pressure parameters, and is conveniently distributed in gas form into the agricultural land 2.

Figure 1 shows three successive ring-shaped circuits associated with the nitrogen-generating unit 5 via a main pipeline 14, possibly with fittings and shut-off valves.

Also, in the process the gaseous fluid unit 5 is equipped with programmable control means 8 to generate the gaseous mixture 4 with an amount of residual oxygen and/or an amount of nitrogen 3 according to programmed quantitative parameters. The programmable control means 8 are programmed according to the flow rate of the distribution circuit 10, the amount of residual oxygen contained in the gas mixture 4 containing nitrogen 3, the pressure generated by the nitrogen generating unit 5 or the pressure of the removable containers and according to the time parameters for dosing the nitrogen-containing gas mixture 4.

Preferably, the time parameters for distribution are dynamically variable. According to an embodiment, a possible program involves injection of the nitrogen-containing gas mixture 4 for one cycle.

Preferably, the distribution cycle may change from one dose once a week, with a minimum duration of 5 minutes, to a continuous dose, with such a flow rate as to ensure that the pressure P1 is found at said at least one opening 25, in each tube portion 20.

Advantageously, in one embodiment, the nitrogen generating unit 5 is obtained by interposing a nitrogen generator 30 between an air compressor 28 and a nitrogen reservoir 32.

Conveniently, each tube portion 20 is preferably formed with the same material as the tubing section 16, e.g. polyvinyl chloride or PVC or polypropylene PP or any similar material that allows it to be manufactured at a low cost and to withstand the pressure P1 of the gas mixture 4.

Furthermore, the tube portions 20 may be interchanged with others differing therefrom in length and/or in the arrangements of the at least one opening 25 relative to the size of the roots of the seedlings of the planted crops.

Also, in the process, the tube portions 20 may be formed with additional lateral openings, to allow outflow of the gas mixture 4, i.e. the inert gas with nitrogen as the main constituent, at various levels below the surface P of the agricultural land 2.

In the process, a manual or automatic lifting plant, not shown, may be provided to lift the distribution circuit 10 when the plant is in the rest position.

The quantitative parameters of nitrogen 3 in the gas mixture 4, i.e. in the inert gas having nitrogen as the main constituent 4 and the time parameters for injection thereof into the agricultural land 2 depend at least on the following:
- specific weight of the agricultural land 2;
- minimum and maximum temperature and moisture of the agricultural land 2;
- specific planted crop to be cultivated and/or treated;
- preset distance D between the planted seedlings;
- shape of the specific crop roots;
- minimum and maximum depths of the roots;
- size of the agricultural land 2;
- ripening time of the planted crop, i.e. the time required for growth of the crop from planting to ripening.

The present invention also relates to a pest control plant 1 which is adapted to implement the above described process of microorganisms pest control of a agricultural land 2, where parts and details as described above will be designated by the same reference numerals and letters.

The plant 1 comprises a gaseous fluid unit 5 which comprises, in one embodiment, a gaseous fluid generating unit 5 adapted to generate a gas mixture 4 having said gaseous fluid as a main constituent, said gaseous fluid having preset quantitative parameters. In a further embodiment, said gaseous fluid unit 5 comprises or one or more removable gaseous fluid containers in which the gaseous fluid has predetermined high pressure quantitative parameters.

The gaseous generating unit is preferably a nitrogen generating unit 5 having programmable control means 8 for generating the gas mixture 4, i.e. an inert gas having nitrogen as a main constituent.

The nitrogen-generating unit 5, which is known per se, comprises a nitrogen generator 30 interposed between an air compressor 28, which preferably draws air from the environment and a nitrogen reservoir 32. The programmable control means 8 also allow definition of time and quantity parameters, which are dynamically variable, and adapted to prepare and distribute the gaseous mixture 4 into the agricultural land 2.

The plant 1 comprises at least one distribution circuit 10, which is coupled to the gaseous fluid unit 5 via a main pipeline 15 and has at least one tubing section 16 on the surface P of the agricultural land 2. The tubing section 16 comprises at least one opening 25, allowing he gas mixture 4 to flow out into the agricultural land 2.

In one embodiment, the tubing section 16 has the at least one opening 25 at the surface P.

In a further embodiment, the tubing section 16 comprises a tube portion 20 with the at least one opening 25 located at a preset level L below the surface P, for the outflow of the nitrogen gas mixture 4.

In one embodiment, the tubing section 20 has one end 22 associated with the tube portion 16, through the interposition of a removable coupling 21 having connection means. The tube portion 20 has two or more openings 25 on the lateral surface, substantially having a circular shape and located at a predetermined distance from each other, which is substantially equal to the distance D at which the seedlings are planted in rows. The number and position of the two or more openings 25 will obviously depend on the type of crop that has been planted, as well as on the conformation of the agricultural land 2 and/or other parameters.

Furthermore, the tube portion 20 has a closing plug 24 at the free end 23, i.e. at the end opposite to the end 22 associated with the tubing section 16, such plug being either removable or formed of one piece with the tube portion 20.

In one embodiment, the tube portion 20 has a plurality of openings 25 arranged over a section or the entire axial length of the tube 20 for even distribution of the gas mixture 4 around the tube portion 20 itself.

According to an embodiment, the distribution circuit 10 comprises a plurality of tubing sections 16 on the surface plane P, in a closed-ring configuration, in which each tubing section 16 has tube portions 20 buried in the agricultural land 2, and associated at its ends.

In one embodiment, the tube portions 20 are buried with the at least one opening 26 at a depth L from the surface plane P, preferably below the maximum development level expected for the roots of the planted crops.

According to an embodiment, the tubing sections 16 are adapted to carry the gas mixture 4 at a pressure P1 that is 0 to 3 bar higher than the atmospheric pressure value, said pressure being measured in said at least one opening 25.

Conveniently, the tube portions 20 are made from the same materials that forms the tubing sections 16, and have a substantially circular cylindrical shape, with preset inside and outside diameters, for the passage of the gas mixture 4, i.e. the inert gas having nitrogen as the main constituent.

In the operating arrangement, the tubing sections 16 and the tube portions 20 are substantially perpendicular to each other.

In one embodiment, the tube portions 20 are arranged with a preset center-to-center distance D, which is preferably the same distance D at which the seedlings of the crops are disposed in rows, and are interposed between seedlings, as shown in Figures 2 and 3.

Advantageously, the closing plug 24 of each tube portion 20 forces the gas mixture 4 to flow out of the at least one lateral opening 25, substantially parallel to the surface plane P, thereby providing a agricultural land strip 2 having a homogeneous amount of nitrogen-containing gas mixture 4. This will provide a totally unfavorable environment for microorganisms, which still has enough oxygen as to allow optimal growth of the crop roots.

The tube portions 20 may be replaced with other tube portions differing therefrom in length and/or in the arrangements of the at least one opening 25 relative to the size of the roots of the seedlings of the planted crop.

The arrangements and sizes of the tube portions 20 are defined according to the pressure P1 of the gas mixture 4 and also according to the crops that have been planted, and possibly on further needs.

The gaseous fluid unit 5 preferably provides such a gas mixture 4 that the volume fraction of nitrogen 3 based on the volume of the gas mixture 4 will range from 78% to 99.9%, preferably from 90% to 99.9%.

Preferably, the gas mixture 4 has not less than 0.1% and not more than 10% residual oxygen by volume.

In a preferred embodiment, the gas mixture 4 has 5% to 6% residual oxygen by volume, with more than 78% nitrogen by volume, more preferably 90% or more. Preferably, the distribution circuit 10 is used to distribute the gas mixture 4, i.e. the inert gas with nitrogen as the main constituent, into the agricultural land 2 with predetermined and dynamically variable time and quantity parameters. Particularly, the at least one tube portion 20 is used to inject the gas mixture 4 mainly at the level L below the surface P of the agricultural land 2, proximate to the crop roots.

In one embodiment, the nitrogen-generating unit 5 is located proximate to or at the agricultural land 3 for on-site non-invasive generation of the gas mixture 4, i.e. the inert gas having nitrogen as the main constituent.

The quantity and time parameters for production and distribution of the nitrogen gas mixture 4 may obviously change according to the crop that has been planted, as well as the stage of cultivation and/or any other parameters such as temperature and moisture of the agricultural land 2. Preferably, a distribution cycle may change from one dose once a week, with a minimum duration of 5 minutes, to a continuous dose, with such a flow rate as to ensure that the pressure P1 is found at said at least one opening 25, in the tube portions 20.

The plant 1 may be equipped with a manual or automatic lifting plant, not shown, for lifting the distribution circuit 10 when the plant is in a rest position.

Concerning the formation of the plant, once the distribution circuit 10 has been provided, with the tube portions 20 associated with the tubing sections 16, the tubing sections 16 are laid on the surface P of the agricultural land 2 and the tube portions 20 are fitted into the agricultural land 2 in a middle position between seedlings of the planted crop, with the at least one opening 25 placed at the preset level L.

Furthermore, each tube portion 20 is placed and oriented in such position that the roots of each seedling may be impinged upon by the jet of gas mixture 4, i.e. the inert gas having nitrogen as the main constituent, which flows out of one or more successive tube portions 20.

The distribution circuit is connected to the gas fluid unit 5, i.e. the nitrogen-generating unit or to one or more removable gaseous fluid containers and the programmable control means 8 are used to produce and distribute the gas mixture 4 into the agricultural land 2.

Preferably, the programmable control means 8 are programmed according to the flow rate P1 at said at least one opening 25 and hence at the distribution circuit 10, according to the amount of nitrogen 3 contained in the gas mixture 4, according to the pressure generated by the nitrogen generating unit 5 or according to the pressure of said one or more removable gaseous fluid containers and to the dosing frequency for the gas mixture 4.

Of course, such parameters may dynamically change according to the cultivation stage of the planted crop.

Therefore, the process and plant of the present invention allow fulfillment of the intended objects. Particularly, such process and plant provide an environment having a reduced amount of microorganisms proximate to the roots of the planted crops and to a preset level of the agricultural land, which amount may be conveniently and easily controlled.

The process and plant are also easy to use and do not require employment of noxious chemicals, thereby ensuring environment- and health-friendliness for compatibility with agricultural activities and later crops in the agricultural land.

The process and plant are entirely autonomous, due to the programmable control means, whereby they ensure simple and practical use for both outdoor and small-plot cultivation during planting of the crop.

The distribution circuit may be easily and conveniently installed without requiring skilled personnel or special equipment, and may be changed in terms of shape and size, as needed by the crop, the user and the agricultural land.

Those skilled in the art will obviously appreciate that a number of changes and variants may be made to the arrangements as described hereinbefore to meet incidental and specific needs, without departure from the scope of the invention, as defined in the following claims.

## Claims

1. A process of microorganism pest control in an agricultural land (2) using a gaseous fluid (3), **characterized in that** it comprises the steps of:
- preparing a gas mixture (4) comprising said gaseous fluid (3), with predetermined quantitative parameters of said gaseous fluid (3), and
- distributing said gas mixture (4) into said agricultural land (2) according to predetermined time and quantity parameters.

2. The process as claimed in claim 1, **characterized in that** said gas mixture (4) is distributed in the proximity of the surface (P) of said agricultural land (2).

3. The process as claimed in claim 1, **characterized in that** said gas mixture (4) is distributed at a preset level (L) below the surface (P) of said agricultural land (2).

4. The process as claimed in claim 1, **characterized in that** said gaseous fluid is nitrogen.

5. The process as claimed in claim 4, **characterized in that** the volume percent of said nitrogen (3) based on the volume percent of said gas mixture (4) ranges from 78% to 99.9%.

6. The process as claimed in claim 4, **characterized in that** the volume percent of said nitrogen (3) ranges from 90% to 99.9%.

7. The process as claimed in claim 4, **characterized in that** said gas mixture (4) has not less than 0.1 % and not more than 10% residual oxygen by volume.

8. The process as claimed in claim 7, **characterized in that** said volume percent of said residual oxygen based on the volume of said gas mixture (4) preferably ranges from 5% to 6%, with more than 78% nitrogen by volume, and particularly said volume percent of nitrogen is 90% or more.

9. The process as claimed in one or more of the preceding claims, **characterized in that** said gas mixture (4) is prepared from ambient air.

10. The process as claimed in one or more of the preceding claims, **characterized in that** it further includes the steps of:
- providing a distribution circuit (10) for distributing said gas mixture (4) on said agricultural land (2);
- providing said distribution circuit (10) with at least one tubing section (16) comprising at least one opening (25) for allowing the outflow of said gas mixture (4);
- inserting said tubing section (16) into said agricultural land (2), with said at least one opening (25) being placed at a preset level (L) below a surface (P) of said agricultural land (2);
- injecting said gas mixture (4) through said at least one opening (25) into said agricultural land (2) according to predetermined time and quantity parameters, and with a pressure value that is 0 to 3 bar higher than atmospheric pressure.

11. A plant (1) for pest control in an agricultural land (2), **characterized in that** it comprises:
- a gaseous fluid unit (5) comprising a gas mixture (4) with a gaseous fluid (3), said gaseous fluid (3) having predetermined quantitative parameters;
- programmable control means (8) coupled to said gaseous fluid unit (5) and adapted to program said gaseous fluid unit (5) to distribute said gas mixture (4) according to predetermined time and quantity parameters;
- at least one distribution circuit (10) coupled to said gaseous fluid unit (5) and having at least one tubing section (16) that is adapted to be placed on said agricultural land (2), said tubing section (16) comprising at least one opening (25), allowing said gas mixture (4) to flow out into said agricultural land (2).

12. The plant as claimed in claim 11, **characterized in that** said at least one tubing section (16) has said at least one opening (25) proximate to the surface (P) of said agricultural land (2) or at a preset level (L) below a surface (P) of the agricultural land (2).

13. The plant as claimed in claim 11 or 12, **characterized in that** said at least one tubing section (16) is associated with at least one tube portion (20) having a plurality of said at least one opening (25) on the lateral surface.

14. The plant as claimed in one or more of claims from 11 to 13, **characterized in that** said distribution circuit (10) comprises a plurality of said tubing sections (16) associated with one another to define a closed-ring circuit, said tubing sections (16) being adapted to carry said gas mixture (4) at a pressure (P1) that is 0 to 3 bar higher than atmospheric pressure, said pressure (P1) being measured at said at least one opening (25).

15. The plant as claimed in claim 11, **characterized in that** said gaseous fluid unit (5) is a gaseous fluid-generating assembly or one or more removable gaseous fluid containers in which the gaseous fluid has predetermined high pressure quantitative parameters.
